Europäisches Patentamt

European Patent Office

Office européen des brevets

(19)

(11) Publication number: **0 100 012**
A2

(12) # EUROPEAN PATENT APPLICATION

(21) Application number: **83106742.6**

(22) Date of filing: **08.07.83**

(51) Int. Cl.³: **G 01 S 13/52,** G 01 S 7/28

(30) Priority: **08.07.82 IT 4878282**

(43) Date of publication of application: **08.02.84**
**Bulletin 84/6**

(84) Designated Contracting States: **DE FR GB NL SE**

(71) Applicant: **SELENIA INDUSTRIE ELETTRONICHE ASSOCIATE S.p.A., Via Tiburtina, KM 12.400, I-00131 Roma (IT)**

(72) Inventor: **Giaccari, Ennio, via Fogazzaro 74, IT-Rome (IT)**

(74) Representative: **Gustorf, Gerhard, Dipl.-Ing., Bernbeckweg 9, D-8300 Landshut (DE)**

(54) **Device for post-detection cancelling of erroneous radar echos.**

(57) Device for cancelling false spureous radar echoes with Doppler filtering method and temporal correlations. The device allows a frequency selectivity with a memory on a plurality of antenna rotations, which is capable to distinguish false echoes from useful echoes, operating on a selective attenuation in the space of the frequency and of the time.

EP 0 100 012 A2

DIPL.-ING.
**GERHARD GUSTORF**
PATENTANWALT

BERNBECKWEG 9
TEL. (8711 25 09) 0 1 2
8300 LANDSHUT

August 8, 1983

PA 1 366 EP – ao

SELENIA

Industrie Elettroniche Associate S.p.A.

Via Tiburtina KM 12.400

Rome (Italy)

---

Device for post-detection cancelling of false radar
echoes

---

The present invention relates to a device which allows cancelling of false radar echoes. It may be used in the field of filtering radar signals. The invention particularly relates to the cancellation of spurious echoes by Doppler filter methods and temporal correlations.

It is known to those skilled in the art that one of the problems never completely resolved up to the present time for a 2D radar for the aeroplan detection is that of the so-called "angels".

In practice, undesired radar echoes may be caused either by obstacles  moving on the ground (cars, buses, ships etc.) or by a flight of birds or by sudden alterations of the atmospheric refraction index (ascending layers of warm air, evaporation of great amounts of water as e.g. lakes, moors etc.).

In extremely critical situations, these echoes can render impossible the surveyance of the air traffic. Their number and their intensity could be such that they mask the useful echoes (aircrafts) until a complete radar blindness.

In the event that the number and the intensity does not disturb the functions of traffic monitoring, the trouble and the stress in the work of the inspectors causes a quality reduction of the monitoring having extremely negative results as to the technical-economical balance of the management of the air space.

Further, the completely automated modern systems for detecting the useful echoes and for automatic recording of the pathes require a radar signal filtered as satisfactorily as possible from impure elements in order to sophisticate the processing without enlarging the corresponding hardware beyond a reasonable limit.

The solution used up to now partially solves the problem of the cancelling of the angels. Indeed, often the normalization of the false echoes is obtained by accepting a reduction of the sensibility on real targets.

Indeed, either the amplitude of the echo (STC) or its elevation position (second antenna bundle in reception) is influenced. Further, these checks should influence in a generalized manner the distance and the azimuth, the position causing said perturbations in the monitored air space being known.

Often the result is not sufficient because it is nearly impossible to always determine the best compromise between CFAR (Constant False Alarm Rate) and radar covering. A simple way of adaptation to the ambient situation is that of disposing of a plurality of laws of attentuation with respect to the distance, such that always the most appropriate law may be chosen; however by a constant manual check.

0100012

An analysis of the angels phenomenon as it appears in a radar for the monitoring of the air traffic has turned out that for the majority of cases, said phenomenon can be characterized as follows:

- small intrinsic fluctuation (some 10 Hertz )
- limited  absolute velocity (some 10 km/h),
- signal /noise ratio comparable to that of aircrafts having limited dimensions (some $m^2$);
- high average density;
- no uniform spacial distribution;
- slow time - evolution.


These characteristics caused to provide a device that

a.  should be selective in Doppler frequency;

b.  should operate by means of different attenuation levels;

c.  should be based on a criterion of spacial density;

d.  should be adaptive on cells predetermined in distance and azimuth;

e.  should maintain stored data for a time necessary for discriminating between the interference phenomenon and the useful echoes.


It has been realized that the proposed method of normalization requiring not more than the information content of the signal in the range of the time of illumination of the target, allows to reduce the number of false echoes illustrated by angels to values which may be totally managed by  post processing filtering criterions (plot filter, tracking etc.).


The present invention concerns a device consisting of a Doppler filter bank realized by the FFT algorithm, followed by an area processor on each filter loading a memory, based on a criterion of density and of temporal evolution of the interference phenomenon, the content therof being used by the scanning of the antenna which is subsequent to the measuring antenna for an attenuation controlled by the available signal.

In this way, it is possible to produce an attenuation

- in the interesting areas
- on the only signal interfering with the Doppler frequency of said signal.

A suitable hysteresis of the logic loading the memory excludes the possibility to intervene in the useful pathes, although a sufficient adaptivity is maintained to trace phenomenons slowly evolving in the time.

The invention will now be described as an example illustrated in the Figures.

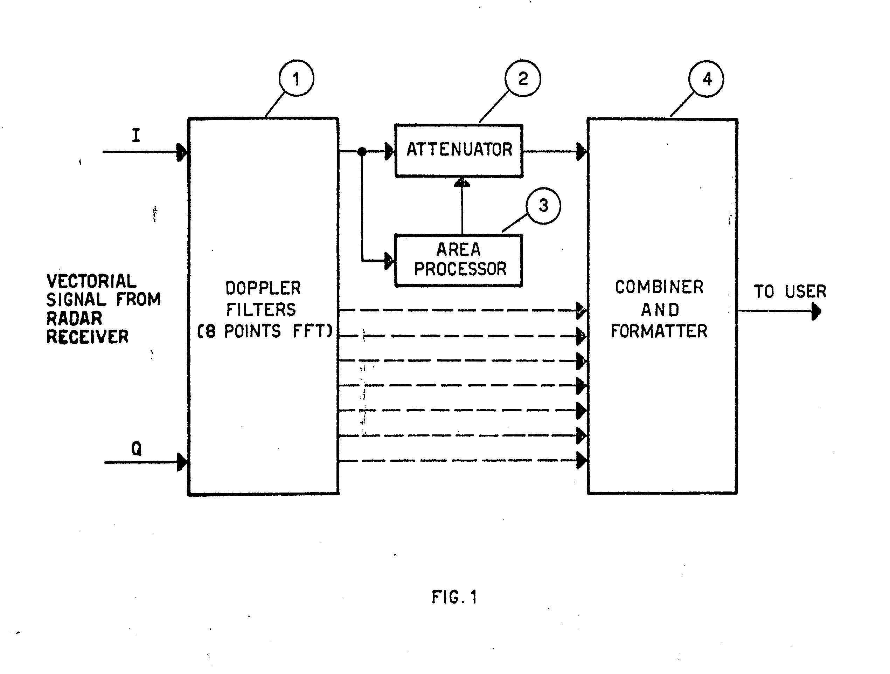

Figure 1 shows a diagram in which I and Q represent the input signals split up in the two components which are in phase and in quadrature. Reference No. 1 is a Doppler filter bank realized by the FFT technique (Fast Fourier Transformer). Reference No. 2 is an attenuator in cascade connection to each filter of the FFT. Reference No. 3 represents a processor for a sector having a predermined distance and azimuth, which is able to measure the density of the spurous echoes (angels). Processor 4 combines the outputs of the various filters after making use of the attenuator controlled by the processor 3 and delivers at the output a signal being free from the disturbance known as "angels".

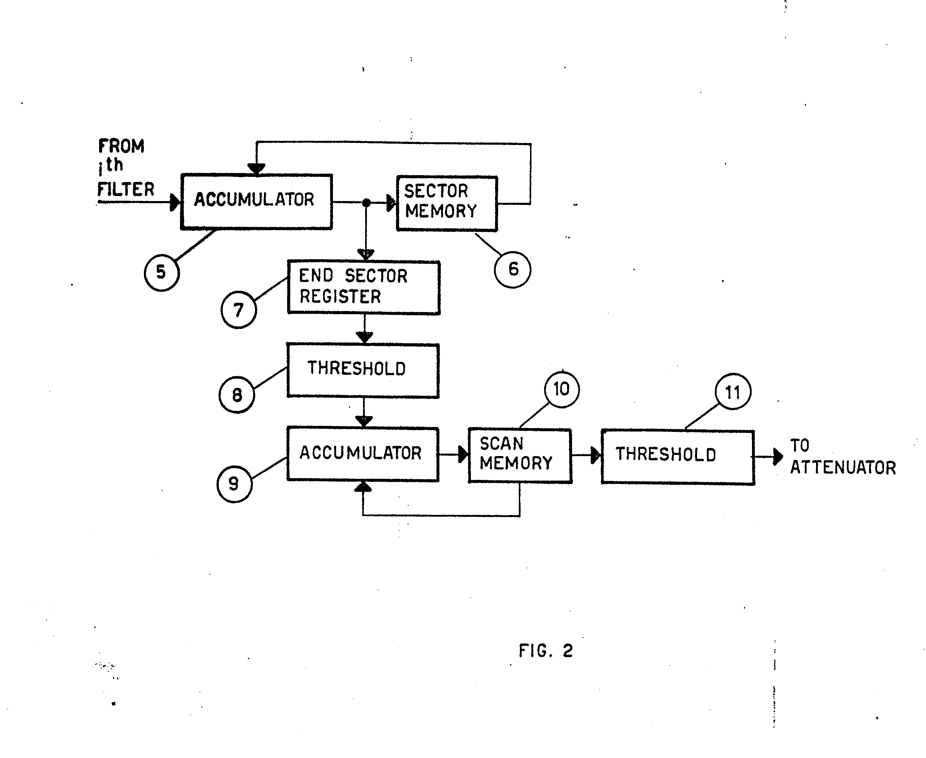

Figure 2 shows in detail the block 3 of Fig. 1. Here reference No. 5 is an accumulator for the signals received from the $i^{th}$ filter. The count of the accumulator is delivered to a sector memory 6 having as many elements as cells along the sweep 32.

At the end of the angular sector 7 being part of said radar cell, the memory content is compared with a threshold value 8 (spacial density); if this threshold value is exceeded, the content of a scanning memory 10 (32 x 64) of said cell is incremented. The same content is reduced by one if the threshold value of the spacial density 8 is not exceeded. The memory content is updated by the accumulator 9 and is limited upwards and downwards in order to prevent overflows. The value which is present in each cell of the scanning memory is compared with a threshold value which determines the time constant of the interference phenomenon.

If said threshold value is exceeded, the attenuator 2 is activated in real time attenuating the output signal from the analysed filter. The device is acting with a delayed scanning which, for the stationariety of the phenomenon in the time, does not limit its efficiency.

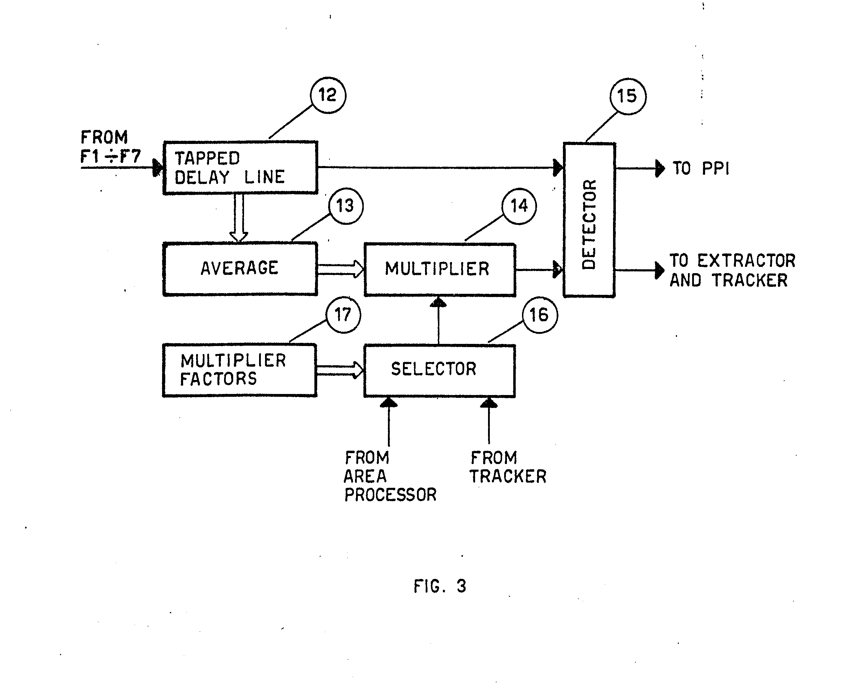

Figure 3 shows the realized system of the attentuator 2 of Fig. 2. The output signal of each filter is stored in a delay line 12 the content of which is averaged in real time by a sum - and average - device 13. The result of the average is multiplied by a multiplier 14 with a coefficient selected from a plurality of possible values (17).

The selection is made by a device 16 which can be controlled either by the sensor of compact areas of false echoes (Fig. 2) or by other consumer devices which are capable of announcing an overcharge of datas (automatic tracer). The actual data traced from the delay line 12 is compared for the final detection in a detection circuit 15.

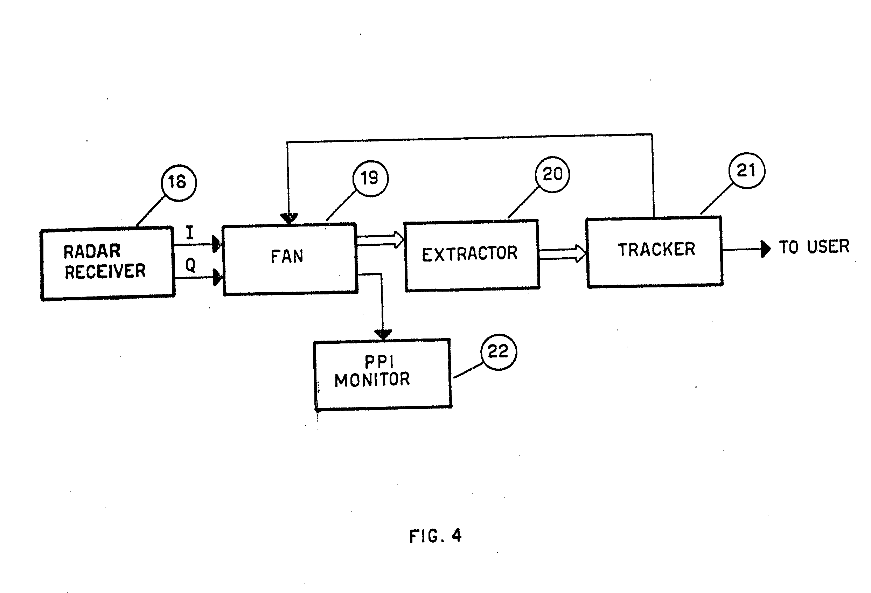

Figure 4 shows the device in accordance with the present invention as described in a general diagram of radar scanners. In said figure are illustrated the radar receiver 18, the cancellation means 19 of the false echoes, the filtered output of which may be directly displayed on a monitor or used by a co-ordinate extractor 20, and the tracer 21 which converts the radar data into traces and which selects between the various detection criterions of the device to normalize the false echoes (19).

The present invention has the following advantages with respect to the prior art: the attenuation of the input disturbance is selective as to Doppler, adaptive as to distance and azimuth and automatic.

The device may be realized in a completely digital manner controlling the two components in phase and in quadrature of the radar signal by input data of 12 bit.

The Doppler filters are obtained by the FFT pipe line technique.

The area processor was a technology of high integration and of a considerable velocity for realizing the functions of loading and updating in time-sharing.

The present invention may be particularly applied to radar for the air monitoring.

## Claims

1. Device for the post-detection cancelling of false radar echoes,characterized in that the filter provided in said device operates by means of real time attenuation on a high quantity of data, in function of the Doppler spectrum, of the spacial density and of the temporal stationariety.

2. Device according to claim 1, characterized by the fact that it consists of a filter bank in the interval of Doppler frequences occupied by the interference phenomenon to eliminate.

3. Device according to claim 2, characterized in that the filters of the bank are selective in frequency to such an extent that they arrive at at least 40 dB.

4. Device according to anyone of the preceding claims, characterized in that a detection criterion is used for each filter with variable threshold value and with a hardening coefficient adaptive for the totality of disturbance.

5. Device according to anyone of the preceding claims, characterized in that it comprises a sensor for compact areas which detects in each elementary cell the presence of a disturbance at high density.

6. Device according to anyone of the preceding claims, characterized in that it comprises a correlator for a plurality of antenna scannings, capable to recognize the stationarity of the high density signal in the elementary cell.

7. Device according to anyone of the preceding claims, characterized in that it comprises an attenuator which may be checked by the sensor for compact areas or by external devices, and which intervenes on the detection logic of every filter in order to reduce the quantity of data to exchange with the subsequent extraction devices.

8. Device according to anyone of the preceding claims, characterized in that it is used in monitoring radar as a filter element for reducing the number of false alarms in a time unit without prejudicing the detection of useful signals.

1/4

I →

VECTORIAL
SIGNAL FROM
RADAR
RECEIVER

Q →

DOPPLER
FILTERS
(8 POINTS FFT)

ATTENUATOR

AREA
PROCESSOR

COMBINER
AND
FORMATTER

TO USER

FIG. 1

FIG. 2

FIG. 3

FIG. 4